# EUROPÄISCHE PATENTSCHRIFT

(11) **EP 3 092 197 B1**
(45) Veröffentlichungstag und Bekanntmachung des Hinweises auf die Patenterteilung: **09.08.2017**
(21) Anmeldenummer: 14816191.2
(22) Anmeldetag: 11.12.2014
(51) Int. Cl.: C01B 33/03, B01J 8/00, B01F 5/24

(54) **VERFAHREN ZUR HERSTELLUNG VON GRANULAREM POLYSILICIUM**
METHOD FOR PRODUCING GRANULAR POLYSILICON
PROCÉDÉ DE PRODUCTION DE POLYSILICIUM GRANULAIRE

(30) Priorität: 08.01.2014 DE 102014200080
(43) Veröffentlichungstag der Anmeldung: 16.11.2016
(73) Patentinhaber: Wacker Chemie AG, 81737 München (DE)
(72) Erfinder: HAUSWIRTH, Rainer, 84375 Kirchdorf (DE); ENGGRUBER, Robert, Burghausen 84489 (DE)
(74) Vertreter: Potten, Holger
(86) Internationale Anmeldenummer: PCT/EP2014/077323
(87) Internationale Veröffentlichungsnummer: WO 2015/104127

(56) Entgegenhaltungen:
- EP-A1- 2 662 334
- FR-A- 448 704
- US-A- 3 369 798
- US-A1- 2002 159 329

## Beschreibung

Die Erfindung betrifft ein Verfahren zur Vermeidung einer Partikelentmischung bei der Handhabung von granularem Polysilicium nach Herstellung des granularen Polysiliciums.

Polykristallines Silicium, oft auch kurz Polysilicium genannt, wird beispielsweise mittels des Siemens-Prozesses hergestellt. Dabei werden in einem glockenförmigen Reaktor ("Siemens-Reaktor") dünne Filamentstäbe aus Silicium durch direkten Stromdurchgang erhitzt und ein Reaktionsgas enthaltend eine Silicium enthaltende Komponente und Wasserstoff wird eingeleitet. Dabei stecken die Filamentstäbe üblicherweise senkrecht in am Reaktorboden befindlichen Elektroden, über die der Anschluss an die Stromversorgung erfolgt. Je zwei Filamentstäbe sind über eine waagrechte Brücke (ebenfalls aus Silicium) gekoppelt und bilden einen Trägerkörper für die Siliciumabscheidung. Durch die Brückenkopplung wird die typische U-Form der auch Dünnstäbe genannten Trägerkörper erzeugt. An den erhitzten Stäben und der Brücke scheidet sich hochreines Polysilicium ab, wodurch der Stabdurchmesser mit der Zeit anwächst (CVD / Gasphasenabscheidung). Nach Beendigung der Abscheidung werden diese Polysiliciumstäbe üblicherweise mittels mechanischer Bearbeitung zu Bruchstücken unterschiedlicher Größenklassen weiterverarbeitet, klassifiziert, gegebenenfalls einer nasschemischen Reinigung unterzogen und schließlich verpackt.

Eine Alternative zum Siemens-Prozess stellen Wirbelschichtverfahren dar, bei denen granulares Polysilicium hergestellt wird. Dies geschieht durch Fluidisierung von Siliciumpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases erfolgt eine Pyrolysereaktion an der heißen Partikeloberfläche. Dabei scheidet sich elementares Silicium auf den Siliciumpartikeln ab und die einzelnen Partikel wachsen im Durchmesser an. Durch den regelmäßigen Abzug von angewachsenen Partikeln und Zugabe kleinerer Siliciumpartikel als Keimpartikel kann das Verfahren kontinuierlich mit allen damit verbundenen Vorteilen betrieben werden. Als siliciumhaltiges Eduktgas sind Silicium-Halogenverbindungen (z. B. Chlorsilane oder Bromsilane), Monosilan (SiH₄), sowie Mischungen dieser Gase mit Wasserstoff beschrieben.

Während das Polysilicium im Siemens-Verfahren als zylindrischer Siliciumstab anfällt, der vor seiner Weiterverarbeitung zeit- und kostenaufwändig zu Bruchstücken zerkleinert und ggf. gereinigt werden muss, besitzt granulares Polysilicium Schüttguteigenschaften und kann direkt als Rohmaterial z. B. zur Einkristallerzeugung für die Photovoltaik- und Elektronikindustrie eingesetzt werden.

Bei der Herstellung von granularem Polysilicium in einem Wirbelschichtreaktor ist es im laufenden Prozess nötig, Siliciummaterial in regelmäßigen Abständen oder kontinuierlich in den Reaktor zu dosieren und an anderer Stelle fertig gewachsenes granulares Polysilicium aus dem Reaktor zu entnehmen.

US 2011024266 A1 offenbart ein Verfahren zur Förderung von granularem Polysilicium mittels horizontaler und /oder vertikaler Bewegung der Fördervorrichtung, dadurch gekennzeichnet, dass die Fördervorrichtung nach außen vollständig abgekapselt ist und die Vorwärtsbewegung des Granulats durch eine Taumelbewegung der Fördervorrichtung mittels der Anregung von mindestens einem an der Fördervorrichtung angebrachten Permanentmagneten durch ein elektromagnetisches Feld erzeugt wird, wobei das elektromagnetische Feld von außen an die gekapselte Vorrichtung angelegt wird.

EP 2 662 334 A1 offenbart ein Verfahren zur Herstellung von granularem Polysilicium in einem Wirbelschichtreaktor. US 3369798A offenbart eine Vorrichtung zum Mischen von trockenen, körnigen Materialien, die eine Beschickungseinrichtung für die dosierte Zuführung der Materialien umfasst, wobei die Beschickungseinrichtung oberhalb von mindestens zwei senkrecht übereinander angeordneten und von den Materialien unter Schwerkraftwirkung durchlaufenen Mischeinheiten angeordnet ist.

FR 448 704 A und US 2002/159329 A1 beschreiben jeweils Vorrichtungen zum Vermischen von granularen Stoffen, wobei die Vermischung auf der Verwendung von Behältern beruht, die auf Kernfluss ausgelegt sind.

Das granulare Polysilicium muss an verschiedenen Stellen des Herstellungsprozesses gehandhabt werden. Zunächst muss es aus dem Reaktor entnommen werden. Dazu eignet sich das oben beschriebene Verfahren. Anschließend muss es gegebenenfalls gesiebt werden, um es in unterschiedliche Klassen von Partikelgrößen zu trennen. Zu diesem Zweck wird es mittels eines Transportcontainers zur Siebanlage transportiert. Schließlich muss das Granulat verpackt werden. Auch zu diesem Zweck ist es üblich, das Granulat mittels eines Containers zur Verpackungsanlage zu transportieren. Alternativ kann das Zielmaterial aus der Siebanlage auch in einen stationären Behälter gesammelt werden. Der Behälter ist direkt mit der Verpackungsanlage verbunden.

Wie zuvor erwähnt, hat das granulare Polysilicium Schüttguteigenschaften. Daher sind Erfahrungen aus der allgemeinen Schüttguttechnik auf das granulare Polysilicium übertragbar.

Ein Problem bei der Handhabung von Schüttgüttern ist die Partikelentmischung.

Die Entmischung nach Partikelgröße entsteht, wenn sich bei der Befüllung eines Behälters (bzw. eines Containers oder eines Silos) in der Mitte ein zentraler Schüttkegel bildet. Beim Befüllen rollen die größeren Partikel aufgrund ihrer größeren Masse und damit höheren kinetischen Energie in die Peripherie (Richtung Behälterwand), während sich das Feingut vornehmlich im Zentrum anreichert.
Eine solche Entmischung über den Querschnitt führt dazu, dass beim Auslaufen nacheinander Produktströme mit unterschiedlicher Partikelgrößenverteilung ausgetragen werden.

Wird keine Maßnahme gegen die Partikelentmischung getroffen, erhält man bei der Herstellung von Silicium-Schüttgütern, bei der das Produkt in Behältern gelagert wird, eine bezüglich der Partikelgröße inhomogene Produktionscharge.

Für viele Halbleiter- und Photovoltaikanwendungen ist allerdings eine möglichst homogene Partikelgröße des Silicium-Rohstoffes erforderlich, um stabile Prozesse zu gewährleisten.

Schüttgut wird im Allgemeinen in Containern oder Silos aufbewahrt. Fließt Schüttgut aus einem Silo aus, unterscheidet man zwischen Massenfluss und Kernfluss.

Bei Massenfluss ist der ganze Siloinhalt in Bewegung, wenn Schüttgut abgezogen wird. Massenfluss ist nur möglich, wenn die Trichterwände ausreichend steil und/oder glatt sind. Außerdem muss gleichzeitig der sogenannte Kolbenfluss erreicht werden, bei dem alle vertikalen Siloquerschnitte auch gleich schnell fließen. Die wesentliche Methode, um dies zu erreichen, ist eine geeignete Auslegung des Trichterneigungswinkels. Nur bei optimaler Dimensionierung, die jedoch äußerst schwierig ist, kann die gewünschte Rückvermischung erreicht werden.

Eine Alternative sind interne Trichter, sogenannte Binserts. Sie sind kleiner als der eigentliche Trichter und werden diesem vorangestellt. Ihr Einsatz ist jedoch begrenzt und ihre Auslegung für den Einsatz bei Entmischung ist schwierig.

Ist die Trichterwand zu flach oder zu rau, stellt sich Kernfluss ein. Bei Kernfluss ist zunächst nur das Schüttgut im Bereich über der Auslauföffnung in Bewegung. Schüttgut im Randbereich des Silos wird erst bei der völligen Entleerung des Silos ausgetragen. Es wird beim Entleeren zunächst das Schüttgut im Zentrum des Silos - also das Feingut - abgezogen, während gegen Ende der Entleerung vorwiegend Grobgut ausgetragen wird. Dieses würde bei einer nachgeschalteten Verpackung des Schüttguts zu unterschiedlichen Qualitäten in den einzelnen Verpackungseinheiten führen.

In einem Massenflusssilo dagegen fließt das beim Füllen entmischte Schüttgut im Trichter wieder zusammen, so dass an der Auslauföffnung die Entmischung nicht zu spüren ist. Massenflusssilos umfassen üblicherweise konische oder keilförmige Trichter.

Es wurde auch vorgeschlagen, der Partikelentmischung entgegenzuwirken, indem der Mischbehälter bewegt wird. Allerdings sind der große technische Aufwand und der hohe Wandabrieb nachteilig. Insbesondere für granulares Polysilicium ist dieser Ansatz unbrauchbar, da der Wandabrieb zu einer unerwünschten Kontamination des hochreinen Siliciums führt. Zudem kann es durch die Bewegung des Schüttgutes zu einem Nachzerkleinerungseffekt kommen, bei dem z. B. Staub entsteht.

Durch Veränderung des Befüllvorganges lässt sich die Entmischung minimieren.
Es lassen sich durch das Befüllen über mehrere Einfüllpunkte große Schüttgutkegel vermeiden. Dadurch wird die Situation zwar etwas entschärft, die Entmischung jedoch nicht gänzlich vermieden. Das erforderliche komplexe Befüllsystem stellt zudem ein Kontaminationsrisiko bei der Herstellung von hochreinen Si-Schüttgütern dar.

Ein anderer möglicher Lösungsansatz besteht in einer Austragshilfe wie einem steuerbaren Innenkegel. Der Innenkegel wird im unteren Teil des Behälters montiert. Dadurch bildet sich ein Ringspalt zwischen Kegel und Behälterwand aus, der gleichzeitig das Grobgut aus dem Randbereich und das Feingut aus dem Behälterzentrum dem Auslauf zuführt, so dass es zu einer gewissen Rückvermischung kommt.

Eine weitere Maßnahme zur Beeinflussung des Entleervorgangs sind sogenannte Entleerungsrohre, die mit Spalten oder Löchern ausgestattet sind. Allerdings ist nur bei einer ausreichend langsamen Entleerung eine Rückvermischung möglich.

Meist werden bei der Herstellung von granularem Polysilicium Transportcontainer verwendet, mit denen das Material von einem zum nächsten Fertigungsprozess transportiert wird.

Der Stand der Technik bietet bislang keine einfachen Erfolg versprechenden Lösungen, um Partikelentmischung bei der Handhabung von granularem Polysilicium zu vermeiden. Transportcontainer mit Massenfluss sind nicht praktikabel, da wegen der notwendigen steilen Trichterneigungswinkel sehr große Bauhöhen benötigt werden. Da der Schwerpunkt dann sehr weit oben liegt, besteht die Gefahr des Kippens.

Aus dieser Problematik ergab sich die Aufgabenstellung der Erfindung.

Die Aufgabe der Erfindung wird gelöst durch ein Verfahren mit den Merkmalen des Anspruchs 1.

Die Erfindung sieht vor, dass das Si-Schüttgut mehrmals umgefüllt wird. Vorzugweise wird es mindestens dreimal umgefüllt.

Die verwendeten Behälter sind dabei auf Kernfluss ausgelegt. Darunter ist zu verstehen, dass beim Entleeren zunächst das granulare Polysilicium im Zentrum des Behälters - also das Feingut - abgezogen wird, während gegen Ende der Entleerung vorwiegend Grobgut ausgetragen wird. Dadurch lässt sich im Gegensatz zu Transportcontainern mit Massenfluss Wandabrieb und somit eine Kontamination des granularen Polysiliciums vermeiden.

Nach einer bestimmten Anzahl an Umfüllvorgängen zeigt sich überraschenderweise eine nur geringe Partikelentmischung über die Produktionscharge.

Eine weitere Reduzierung der Partikelentmischung wird vorzugweise durch Befüll-Verteilerkegel, die im Eintritt der Behälter installiert werden, bewerkstelligt. Solche Einbauten sind dabei sehr kontaminationsarm, bevorzugt in Silicium, ausgeführt.

Überraschenderweise wurde festgestellt, dass zwar nach der ersten Umfüllung eine starke Entmischung, wie sie im Stand der Technik beschrieben wird, vorliegt. Wird das Schüttgut aber weitere Male umgefüllt, findet eine Rückvermischung statt, so dass nach einer bestimmten Anzahl an Umfüllschritten eine Homogenisierung der Partikelgrößenverteilung resultiert.

Es resultiert ein granulares Polysilicium mit einer homogenen Partikelgrößenverteilung über die gesamte Produktionscharge, wobei eine Abweichung des Medianwerts der Partikelgrößen einer beliebigen Stichprobe aus der Charge maximal 30% vom Mittelwert der Partikelgröße der gesamten Charge beträgt.

Bei Bedarf werden für eine weitere Reduzierung der Partikelentmischung Befüll-Verteilerkegel in einen oder mehreren Behältern eingebaut. Diese Einbauten sind dabei sehr kontaminationsarm, bevorzugt in Silicium, ausgeführt.

Bevorzugt ist auch die Verwendung von alternativen Einbauten wie Entleertrichter, Entleerrohr und Binsert, um durch Rückvermischung die Entmischung weiter zu minimieren. Die Einbauten sind aus kontaminationsarmen Werkstoffen wie Silicium gefertigt oder sind mit diesen Werkstoffen ausgekleidet oder beschichtet.

Die Anzahl der Umfüllvorgänge, bei der sich eine möglichst homogene Rückvermischung der Charge einstellt, ist abhängig von der Partikelgrößenverteilung des Schüttguts und des Auslaufverhalten des Behälters. Die optimale Anzahl an Umfüllschritten wird empirisch ermittelt.

Die empirische Ermittlung der Umfüllschritte erfolgt am besten mittels eines Versuchsaufbaus der aus zwei übereinander angeordneten Transportcontainern besteht. Die Container sind mittels einer Containerentleer- bzw. -befüllstation und einer Rohrleitung verbunden. In der Rohrleitung ist zudem eine Probenahmestation installiert, die eine repräsentative Probenahme ermöglicht.
Vor dem ersten Umfüllschritt wird der obere Container mit einem Testmaterial befüllt, das eine homogene Partikelgröße aufweist.
Während des Umfüllvorgangs werden in regelmäßigen Abständen Proben für die Bestimmung der Partikelgröße genommen. Mit Hilfe der Ergebnisse der Partikelgrößenmessungen wird die Partikelentmischung ermittelt.
Die Container werden vor dem nächsten Versuch getauscht: der volle Container wird an der Entleerstation und der leere Container an die Befüllstation angeschlossen.
Es wird erneut die Partikelentmischung aufgenommen.
Die Versuche werden so oft wiederholt bis eine möglichst homogene Partikelgröße über die gesamte Charge vorliegt.

Bei Bedarf kann durch den Einbau eines kegelförmigen Verteilers in die Behälter die Entmischung weiter verringert werden. Damit das hochreine Si-Produkt durch diese Einbauten nicht verunreinigt wird, löst die Erfindung dieses Problem mit einer sehr kontaminationsarmen Bauweise, bevorzugt aus Silicium. Durch den Einbau eines solchen Verteilers werden die Ausbildung eines großen Schüttkegels und damit das Entmischungspotential reduziert. Alternativ kann der Verteilerkegel auch aus dem Produkt selbst gebildet werden, indem auf einer Plattform unterhalb des Eintrittsstutzens die Ausbildung eines Schüttkegels ermöglicht wird.

Vorzugweise werden auch die Siliciumpartikel, auf denen Silicium abgeschieden wird, um granulares Polysilicium herzustellen, zwischen der Erzeugung der Siliciumpartikel durch Mahlung und einer Zuführung der Siliciumpartikel in den Reaktor mehrmals mittels Behältern, die auf Kernfluss ausgelegt sind, umgefüllt. Auch diese Siliciumpartikel, also die Keimpartikel im Abscheidungsprozess, weisen Schüttguteigenschaften auf. Für den Herstellungsprozess von granularem Polysilicium ist es vorteilhaft, wenn die Keimpartikel eine homogene Partikelgrößenverteilung aufweisen.

Ein solches Verfahren zur Herstellung von polykristallinem Siliciumgranulat in einem Wirbelschichtreaktor, umfassend Fluidisierung von Siliciumkeimpartikeln mittels einer Gasströmung in einer Wirbelschicht, die mittels einer Heizvorrichtung aufgeheizt wird, wobei durch Zugabe eines siliciumhaltigen Reaktionsgases mittels Pyrolyse elementares Silicium an den heißen Keimpartikeloberflächen abgeschieden wird, wodurch das polykristalline Siliciumgranulat entsteht, lässt sich kontinuierlich betreiben, indem durch Abscheidung im Durchmesser angewachsene Partikel aus dem Reaktor abgeführt und frische Keimpartikel zudosiert werden.

Die Temperatur der Wirbelschicht im Reaktionsbereich beträgt bevorzugt von 850°C bis 1100°C, besonders bevorzugt von 900°C bis 1050 °C, ganz besonders bevorzugt von 920°C bis 970°C.

Zu der Fluidisierung der Keimpartikel wird vorzugsweise Wasserstoff verwendet.

Das Reaktionsgas wird über eine oder mehrere Düsen in die Wirbelschicht eingedüst.

Die lokalen Gasgeschwindigkeiten am Austritt der Düsen betragen vorzugsweise 0,5 bis 200 m/s.

Die Konzentration des siliciumhaltigen Reaktionsgases beträgt bezogen auf die gesamte durch die Wirbelschicht strömende Gasmenge vorzugsweise 10 mol% bis 50 mol%, besonders bevorzugt 15 mol% bis 40 mol%.

Die Konzentration des siliciumhaltigen Reaktionsgases in den Reaktionsgasdüsen beträgt bezogen auf die gesamte durch die Reaktionsgasdüsen strömende Gasmenge vorzugsweise 20 mol% bis 80 mol%, besonders bevorzugt 30 mol% bis 60 mol%. Als siliciumhaltiges Reaktionsgas kommt vorzugweise Trichlorsilan zum Einsatz.

Der Reaktordruck bewegt sich im Bereich von 0 bis 7 bar Überdruck, vorzugsweise im Bereich 0,5 bis 4,5 bar Überdruck.

Bei einem Reaktor mit einem Durchmesser von z. B. 400 mm beträgt der Massenstrom an Trichlorsilan vorzugsweise 200 bis 400 kg/h.

Der Wasserstoffvolumenstrom beträgt vorzugsweise 100 bis 300 Nm³/h.

Für größere Reaktoren sind höhere Mengen an TCS und H₂ bevorzugt.

Dem Fachmann ist klar, dass einige Prozessparameter idealerweise abhängig von der Reaktorgröße ausgewählt werden. Auch Reaktorheizleistung, KeimpartikelDosierrate und das Bettgewicht sind bei größeren Reaktoren z. B. bei einem Reaktor mit 800 mm Durchmesser vorzugsweise höher als die zuvor genannten Werte.

Um dies anschaulich zu verdeutlichen, sind im Folgenden die Bereiche der auf die Reaktorquerschnittsfläche normierten Betriebsdaten zusammengestellt, in denen das im Rahmen dieser Erfindung beschriebene Verfahren Gültigkeit besitzt.

Der spezifische Massenstrom an Trichlorsilan beträgt vorzugsweise 1600-5500 kg/(h*m2).

Der spezifische Wasserstoffvolumenstrom beträgt vorzugsweise 800-4000 Nm³/(h*m²).

Das spezifische Bettgewicht beträgt vorzugsweise 800-2000 kg/m².

Die spezifische Keimpartikeldosierrate beträgt vorzugsweise 8-25 kg/(h*m²).

Die spezifische Reaktorheizleistung beträgt vorzugsweise 800-3000 kW/m².

Der mittlere Durchmesser der Siliciumpartikel (Keimpartikel) beträgt vorzugsweise mindestens 400 µm.

Das granulare Polysilicium weist vorzugweise Partikelgrößen von 150-10000 µm auf, wobei ein massenbezogener Medianwert einer Partikelgrößenverteilung 850-2000 µm beträgt.

Die Verweilzeit des Reaktionsgases in der Wirbelschicht beträgt vorzugsweise 0,1 bis 10 s, besonders bevorzugt 0,2 bis5 s.

### Kurzbeschreibung der Figuren

**Fig. 1** zeigt schematisch die Umfüllvorgänge von der Entnahme des granularen Polysiliciums aus dem Reaktor bis zu dessen Verpackung.
**Fig. 2** zeigt die Partikelgröße des Granulats in Abhängigkeit von der Abfüllmenge vor der ersten Umfüllung.
**Fig. 3** zeigt die Partikelgröße des Granulats in Abhängigkeit von der Abfüllmenge nach der ersten Umfüllung.
**Fig. 4** zeigt die Partikelgröße des Granulats in Abhängigkeit von der Abfüllmenge nach der zweiten Umfüllung.
**Fig. 5** zeigt die Partikelgröße des Granulats in Abhängigkeit von der Abfüllmenge nach der dritten Umfüllung.

### Beispiel

Im Beispiel wurden drei Umfüllvorgänge durchgeführt.

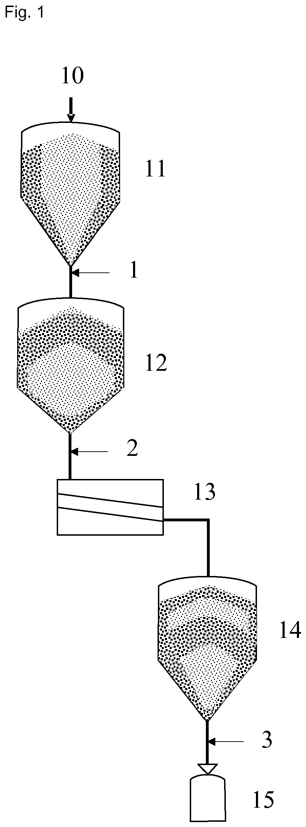

**Fig. 1** zeigt, dass das Granulat aus dem Reaktor **10** entnommen und in einen Pufferbehälter **11** gefüllt wird. Anschließend wird es in einen Transportcontainer **12** umgefüllt und zur Siebanlage **13** transportiert. Dann wird es wiederum in einen Pufferbehälter **14** umgefüllt und schließlich verpackt **15.**

Das Umfüllen von Pufferbehälter **11** in Transportcontainer **12** entspricht der ersten Umfüllung **1.**

Das Umfüllen von Transportcontainer in Pufferbehälter (über eine Siebanlage) entspricht der zweiten Umfüllung **2.**

Das Umfüllen von Pufferbehälter in die Verpackungsanlage entspricht der dritten Umfüllung **3.**

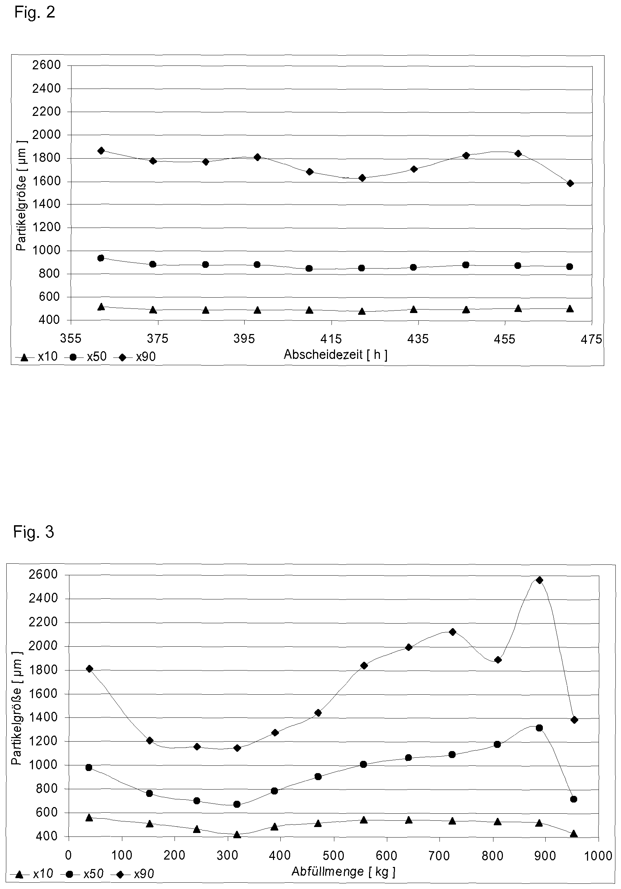

In den **Fig. 2 - 5** wird die Partikelentmischung zu Beginn (erster Pufferbehälter nach Entnahme aus dem Reaktor, **Fig. 2**) und nach jedem der drei Umfüllvorgänge gezeigt.

Zur Darstellung der Entmischung wird der Verlauf der Partikelkenngrößen x10, x50 (Medianwert) und x90 in Abhängigkeit der abgezogenen Si-Schüttgutmenge verwendet.

Anhand der ermittelten Ergebnisse wurden die Schichten von Grob- (groß schraffiert) und Feingut (klein schraffiert) in der **Fig. 1** dargestellt.

Nach der ersten Umfüllung **1** liegt eine starke Partikelentmischung vor, siehe **Fig. 3****.** Der Verlauf des Medianwerts (x50) beginnt bei 980 µm. Bis zu einer ausgetragenen Menge von 320 kg fällt der Wert auf 670 µm. Danach steigt der Wert auf 1300 µm bis ca. 880 kg der abgezogenen Mengen an, bevor er dann auf ca. 720 µm bei weiteren 60 kg abfällt.

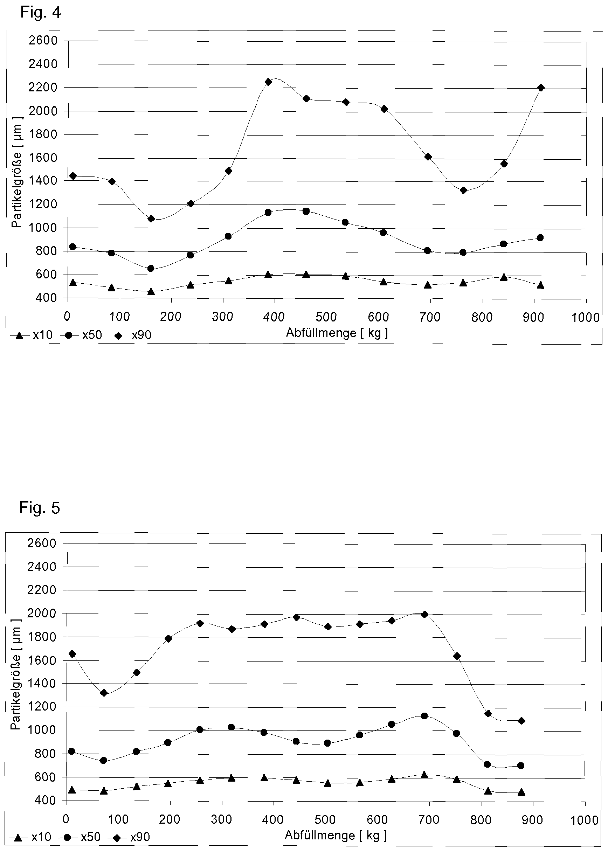

Nach der zweiten Umfüllung **2** ist die Partikelentmischung bereits weniger ausgeprägt, siehe **Fig. 4****.** Der Medianwert fällt von zunächst knapp 840 auf 650 µm nach ca. 160 kg abgezogener Menge ab. In den dann folgenden 300 kg steigt der Medianwert wieder sehr stark auf über 1100 µm an. Ab 460 kg nimmt der Medianwert auf ca. 790 µm ab. In den restlichen 150 kg steigt der Medianwert abermals auf über 920 µm an.

Nach der dritten Umfüllung **3** liegt eine relativ homogene Kornverteilung über die gesamte Charge vor, siehe **Fig. 5****.** Der Medianwert fällt nach 100 kg nur leicht von 820 auf 740 µm ab, danach gibt es in den folgenden 220 kg einen Anstieg auf etwa 1000 µm. Bis 500 kg sinkt der Wert auf 900 µm ab und steigt bis 700 kg auf über 1100 µm an. In der restlichen Si-Menge nimmt er wieder ab und erreicht einen Wert von ca. 700 µm.

Durch den Kernfluss der Behältern, bei der zuerst das Material im Zentrum des Behälters ausfließt, kommt die obere, grobe Schicht etwa in der Mitte des Umfüllvorganges aus dem Behälter. Da sich die groben und feinen Partikel wieder vermischen, kommt es offenbar zu einer teilweisen Rückvermischung der Produktionscharge.

## Patentansprüche

1. Verfahren zur Vermeidung einer Partikelentmischung bei der Handhabung von granularem Polysilicium nach Herstellung des granularen Polysiliciums in einem Wirbelschichtreaktor, umfassend Fluidisierung von Siliciumpartikeln mittels einer Gasströmung in einer Wirbelschicht, die über eine Heizvorrichtung auf eine Temperatur von 850-1100°C aufgeheizt wird, Zugabe eines siliciumhaltigen Reaktionsgases und Abscheidung von Silicium auf den Siliciumpartikeln und Entnahme des granularen Polysiliciums aus dem Wirbelschichtreaktor und vor Verpackung des granularen Polysiliciums, wobei das granulare Polysilicium mehrmals mittels Behältern, die auf Kernfluss ausgelegt sind, umgefüllt wird.

2. Verfahren nach Anspruch 1, wobei wenigstens ein Teil der Behälter Befüll-Verteilerkegel umfassen, die aus Silicium bestehen oder mit Silicium beschichtet oder ausgekleidet sind.

3. Verfahren nach Anspruch 1 oder nach Anspruch 2, wobei wenigstens ein Teil der Behälter einen Entleertrichter, ein Entleerrohr oder einen Binsert umfassen, die jeweils aus Silicium bestehen oder mit Silicium beschichtet oder ausgekleidet sind.

4. Verfahren nach einem der Ansprüche 1 bis 3, wobei die Siliciumpartikel, auf denen Silicium abgeschieden wird, um granulares Polysilicium herzustellen, durch Mahlung von Silicium erzeugt und durch Siebung klassifiziert werden, wobei die Siliciumpartikel zwischen Erzeugung der Siliciumpartikel und einer Zuführung der Siliciumpartikel in den Reaktor mehrmals mittels Behältern, die auf Kernfluss ausgelegt sind, umgefüllt werden.

## Claims

1. Process for avoiding particle segregation in the handling of granular polysilicon after production of the granular polysilicon in a fluidized bed reactor, comprising fluidization of silicon particles by means of a gas flow in a fluidized bed which is heated to a temperature of 850-1100°C by means of a heating apparatus, addition of a silicon-containing reaction gas and deposition of silicon on the silicon particles and withdrawal of the granular polysilicon from the fluidized bed reactor and before packing of the granular polysilicon, wherein the granular polysilicon is transferred by means of vessels designed for funnel flow on more than one occasion.

2. Process according to Claim 1, wherein at least some of the vessels comprise filling distributor cones consisting of silicon or coated or lined with silicon.

3. Process according to Claim 1 or according to claim 2, wherein at least some of the vessels comprise an emptying funnel, an emptying tube or a binsert, each of which consists of silicon or is coated or lined with silicon.

4. Process according to any of Claims 1 to 3, wherein the silicon particles on which silicon is deposited in order to produce granular polysilicon are produced by grinding silicon and classified by screening, wherein the silicon particles are transferred by means of vessels designed for funnel flow on more than one occasion between production of the silicon particles and supply of the silicon particles in the reactor.

## Revendications

1. Procédé visant à éviter une ségrégation de particules lors de la manipulation de polysilicium granulaire après la fabrication du polysilicium granulaire dans un réacteur à lit fluidisé, comprenant la fluidisation de particules de silicium au moyen d'un courant gazeux dans un lit fluidisé, qui est porté à une température de 850 à 1 100°C par un dispositif de chauffage, l'ajout d'un gaz réactionnel contenant du silicium et le dépôt de silicium sur les particules de silicium et le soutirage du polysilicium granulaire du réacteur à lit fluidisé, et avant l'emballage du polysilicium granulaire, le polysilicium granulaire étant transvasé à plusieurs reprises au moyen de contenants qui sont conçus pour le flux central.

2. Procédé selon la revendication 1, dans lequel au moins une partie des contenants comprennent des cônes de remplissage-répartition, qui sont constitués de silicium ou revêtus ou habillés avec du silicium.

3. Procédé selon la revendication 1 ou la revendication 2, dans lequel au moins une partie des contenants comprennent un entonnoir de vidage, un tube de vidage ou un Binsert, qui sont chacun constitués de silicium ou revêtus ou habillés avec du silicium.

4. Procédé selon l'une quelconque des revendications 1 à 3, dans lequel les particules de silicium sur lesquelles du silicium est déposé pour fabriquer du polysilicium granulaire sont formées par broyage de silicium et classifiées par tamisage, les particules de silicium étant transvasées à plusieurs reprises au moyen de contenants qui sont conçus pour le flux central entre la formation des particules de silicium et une introduction des particules de silicium dans le réacteur.
